# EUROPÄISCHE PATENTSCHRIFT

(11) **EP 2 363 185 B1**
(45) Veröffentlichungstag und Bekanntmachung des Hinweises auf die Patenterteilung: **02.01.2013**
(21) Anmeldenummer: 10155397.2
(22) Anmeldetag: 03.03.2010
(51) Int. Cl.: B01D 24/00, B01D 24/08

(54) **Regenierbares Filterelement mit Stützschichten**
Regenerable filter element with support layers
Elément de filtre pouvant être régénéré et doté de couches de support

(43) Veröffentlichungstag der Anmeldung: 07.09.2011
(73) Patentinhaber: Blomeier, Maximilian, 50674 Köln (DE)
(72) Erfinder: Blomeier, Maximilian, 50674 Köln (DE)
(74) Vertreter: Bauer Vorberg Kayser Patentanwälte

(56) Entgegenhaltungen:
- EP-A2- 1 031 366
- DE-A1-102007 040 776
- DE-U1- 20 310 064
- US-A- 3 312 349
- US-A1- 2002 117 435
- US-B1- 6 322 704

## Beschreibung

Die vorliegende Erfindung betrifft ein regenerierbares Filterelement für das Zurückhalten von Grobstoffen in einem Fluid, mit mindestens einer aus Kugeln gebildeten Filterschicht, die zwischen einer sich an die Filterschicht anschließenden durchlässigen inneren Stützschicht und einer sich an die Filterschicht anschließenden durchlässigen äußeren Stützschicht angeordnet ist.

Das Einsatzgebiet für Filterelemente ist sehr weit, was u.a. durch den Grad der gewünschten Filtration, bauliche und räumliche Restriktionen sowie Unterschiede in den Anforderungen aus hygienischen oder lebensmitteltechnologischen Anforderungen begründet ist. Fliterelemente für wasserbauliche Anlagen eignen sich z.B. beispielsweise dazu, strömendes Wasser einer Turbine oder Wasserrades zu reinigen. Als Filterelement bzw. Filteranlagen werden üblicherweise Rechen eingesetzt, die in die Strömung des zu reinigenden bzw. zu nutzenden Wassers eingesetzt werden, um Treibgut aus diesem herauszufiltern. Neben Treibgut, beispielsweise Laub, Hausmüll, Ästen usw. ist aber auch das Herausfiltern von kleineren Partikeln, wie beispielsweise Sand oder Pflanzenteilen notwendig. Hierzu ist dem Rechen oftmals ein Sandfang nachgeordnet, der die Trennung von Schwebeteilchen bewirkt, die am Rechen nicht zurückgehalten wurden.

Filterelemente sind weiterhin auch in der Lebensmitteltechnologie welt verbreitet, um eine Filtration von Lebensmittelrohstoffen und Zwischenprodukten zu bewirken. Auch in sonstigen technologischen Prozessen werden Filter vielfach eingesetzt.

Ein wesentlicher Nachteil der meisten bekannten Filterelemente besteht darin, dass diese nicht zuverlässig rückspülbar ausgeführt sind. Die Filterelemente setzen sich mit der Zeit zu und blockieren den Fluidstrom. Um diese Blockade aufzuheben, ist ein Austausch der Filterelemente oder ein Ausbau und anschließendes Reinigen notwendig. Insbesondere sind in der Feinstfiltration kaum Filterelemente bekannt, die zuverlässig rückspülbar sind. Unter Feinstfiltration wird beispielsweise eine Filtration oder Trenngrenze von weniger als 500 nm verstanden. Nachteilig bei bekannten Filterelementen ist auch, dass eine reproduzierbare und sehr scharfe Trenngrenze oftmals nicht gegeben ist. Schließlich können fein- oder feinsttrennende Filter zwar gespült werden, eine Rückspülung mit relativ hohem Druck ist ohne eine Beschädigung kaum möglich.

Aus der DE102007040776A des gleichen Erfinders ist ein Filterelement bekannt, dass eine Filterschicht aus miteinander verbundenen Kugeln umfasst, die zwischen einer sich an die Filterschicht anschließenden durchlässigen inneren Stützschicht und einer sich an die Fliterschicht anschließenden durchlässigen äußeren Stützschicht angeordnet sind. Ein solches Filterelement weist viele Vorteile auf, jedoch ist der Herstellungsaufwand relativ hoch. Dies ist in erster Linie durch das Verbinden der Kugeln begründet, die entweder miteinander verklebt oder gesintert werden. Hinzu kommt, dass im Falle des Verklebens der Kugeln das Filterelement aufgrund möglicher Ablösungen oder anderer chemischer Reaktionen die Verwendung im Lebensmittelberelch nur eingeschränkt möglich ist. Dies kann nur durch die Verwendung besonderer Klebstoffe umgangen werden.

Aus der US 6,322,704 B1 (D1) ist ein Filterelement, das zwei konzentrisch angeordnete perforierte Rohre aufweist zwischen denen Glaskugeln angeordnet sind. Das weist das Fliterelement eine Rückspülkammer auf, die bei einem Rückspülvorgang die Glasperlen aufnimmt. Bei diesem Rückspülvorgang werden die Glasperlen aus ihrer ursprünglichen Position gerissen und verwirbelt. Bei einer solchen Durchwirbelung kann es beim Wiedereinfinden der Kugeln in die Filterschicht zu sogenannter Brückenbildung kommen. Die Kugeln verspannen sich teilweise zwischen der Innen- und der Außenwand des Filters und bilden selbsttragende Gewölbe. Hinzu kommt, dass die Kugeln beschädigt werden können. Durch beides wird die Packungsdichte und somit auch die Schärfe der Trenngrenze negativ beeinflusst.

Die Aufgabe der vorliegenden Erfindung besteht darin, ein gegenüber dem Stand der Technik verbessertes Filterelement zu schaffen. Dieses soll rückspülbar sein und eine möglichst scharfe Trenngrenze ermöglichen. Das Filterelement soll je nach Ausführung für Grob-, Fein- und Feinstfiltration einsetzbar sein. Das Filterelement soll dabei kostengünstig herstellbar und möglichst einfach einzusetzen sein. Insbesondere soll sich das Filterelement für die Filtration sensibler Fluide, wie beispielsweise Lebensmittel eignen.

Die Aufgabe wird durch ein regenerierbares Filterelement mit den Merkmalen des Anspruchs 1 gelöst.

Der wesentliche Erfindungsgedanke besteht darin, dass die Kugeln nicht miteinander verbunden sind, sondern lose in der Filterschicht angeordnet bzw. diese ausbilden. Dadurch wird der Herstellungsprozess erheblich reduziert und das Filterelement ist uneingeschränkt für sämtliche Anwendungen einsetzbar, Insbesondere für das Filtern sensibler Fluide, also beispielsweise in der Lebensmitteltechnologie. Das Filterelement kommt also ohne Fremdstoffe bzw. ohne Verbrauchsmaterial aus und es ist auch kein erhöhter Energieaufwand für die Verbindung der Kugeln notwendig.

Wesentlich ist, dass die Stützschichten die ansonsten losen Kugeln der Filterschicht jeweils in Ihrer Position halten, so dass diese auch beim Betrieb des Filterelements unverrückbar eingeordnet bleiben. In einer besonders vorteilhaften Ausführungsvariante sind die Stützschichten jeweils durch Gewebe mit definierten Maschenweiten gebildet. Hierzu eignen sich Metall- oder Kunststoffgewebe, denkbar sind auch Glasfaserkunststofflagen. Deren Maschenweite oder Trenngrenze muss dabei geringer sein als der Durchmesser der Kugeln Filterschicht, damit diese bei der Nutzung des Filterelements nicht durch die Gewebe hindurchgedrückt werden können.

Vortellhafterweise sind auf der Außenseite der äußeren Stützschicht Spannelemente angeordnet, die die äußere Stützschicht gegen die Kugeln der Filterschicht drücken und diese damit sicher in ihren Positionen halten. Es hat sich gezeigt, dass mehrere Spannelemente vorgesehen sein können, die selbstnachspannend ausgebildet sind. Dies kann insbesondere dadurch erreicht werden, dass die Spannelemente elastisch sind und somit ein Aufweiten des Filterelements aufgrund hohen Drucks gegen die Spannelemente diese zwar kurzzeitig aufweitet, die Kugeln aber aufgrund der Elastizität unmittelbar nach der Aufweitung zurück in ihre Position getrieben werden.

Der Begriff "lose" meint also in der Erfindung, dass die Kugeln nicht miteinander verbunden sind und dann ihre Position verlieren, wenn Sie nicht durch die Stützschichten in Position gehalten werden. Im Betriebszustand des Filterelements sind die Kugeln letztendlich nicht als "lose" zu bezeichnen, vielmehr ergibt sich insgesamt eine starre und exakt trennende Filterschicht.

In einer besonders vorteilhaften Ausführungsvariante ist das rückspülbare Filterelement kerzenförmig bzw. als längliches zylinderförmiges Filterelement ausgeführt. An ein inneres durchlässiges Rohr schließt sich die innere Stützschicht an, die das Rohr umgibt. Die innere Stützschicht ist wiederum von der Filterschicht umgeben, die selbst von der äußeren Stützschicht eingehüllt wird. Das Rohr weist zur Durchleitung des Fluids entsprechende Öffnungen in der Wandung auf. Ein wesentlicher Vorteil einer solchen zylinderförmigen Ausführungsvariante besteht in der optimalen Raumausnutzung. Insbesondere bei vorgegebenen Querschnitten kann durch die Anordnung mehrerer zylinderförmiger Filterelemente nebeneinander die Filterfläche gegenüber einer Filterwand, die, sich lediglich quer zur Strömungsrichtung erstreckt, deutlich erhöht werden.

Die äußere Stützschicht kann erfindungsgemäß durch einen zusätzlichen durchlässigen Berstschutzmantel aus einem möglichst widerstandsfähigen Material geschützt sein. Beispielsweise kann ein perforierter Berstschutzmantel aus Stahl oder ein Drahtgeflecht vorgesehen sein. Bei der Verwendung von Spannelementen sind diese innerhalb des Berstschutzmantels angeordnet, wobei die Abmessungen der Bauteile derart gewählt sind, dass eine Bewegung der Spannelemente möglich ist.

Neben der Filterschicht können auch eine oder zwei Polizeischichten vorgesehen sein, die sich an die Filterschicht anschließen und ein Austragen der Kugeln der Filterschicht in das Filtrat verhindern. Sind zwei Pollzeischichten vorgesehen, ist die Filterschicht zwischen diesen beiden angeordnet. Die Polizeischichten können erfindungsgemäß ebenfalls durch Kugeln gebildet sein, die durch die Stützschichten in Position gehalten sind.

Die Nutzung von Kugeln als Filterschicht ist sehr vorteilhaft, dazwischen aufeinander geschichteten Kugeln stets ein Freiraum verbleibt, durch den das zu filternde Fluid hindurchgeführt werden kann. Durch die kugelförmige Oberfläche sind dabei optimale Strömungsbedingungen gegeben. Weiterhin führt die Kugelform dazu, dass der Zwischenraum zwischen den einzelnen Kugeln exakt bestimmbar ist, wodurch eine Trenngrenze bzw. der Grad der Filtration extrem genau einstellbar ist. Insbesondere ist dafür deshalb die Verwendung von kallbrierten Kugeln für eine möglichst genaue Filtration vorteilhaft. Eine Filterschicht besteht minimal aus nur drei Schichten, weitere Schichten sind aber nach Bedarf möglich.

Diese Art der Filtration vereint die Filtereigenschaften von Oberflächerfiltern und Tiefenfiltern und ist dann zu 100% regenerierbar, wenn die Kugeln miteinander verbunden oder durch benachbarte Stützschichten fest gehalten sind. Dadurch, dass das rückspülbare Filterelement eine Filterschicht aufweist, die zwischen zwei Stützschichten angeordnet ist, ist auch eine Nutzung des Filterelements unter hohem Druck problemlos möglich. Dies gilt, da die Stützschicht auf beiden Seiten angeordnet wird, in beiden Richtungen, also auch für die Rückspülung.

Durch eine Verwendung von kalibrierten Kugeln kann erfindungsgemäß eine sehr scharfe Trenngrenze realisiert werden. Der freie Porenraum kann exakt berechnet und umgesetzt werden, wobei fertigungsabhängige Abweichungen minimiert sind. Ein unverformbarer Körper mit einem Durchmesser von 15,47 % des Durchmessers der kalibrierten Kugeln wird zuverlässig zurückgehalten. Hieraus ist auch abzuleiten, dass der Durchmesser für die Herstellung der Filterschicht verwendeten Kugeln beispielsweise 0,032 mm betragen muss, wenn eine Trenngrenze von ca. 0,005 mm erzielt werden soll. Durch die Nutzung der Ergebnisse aus der Forschung und Entwicklung im Bereich der Nanotechnologie sind Trenngrenzen von kleiner 1,0 nm realisierbar.

Das Filterelement ist nicht nur rückspülbar, es ist vielmehr vollständig regenerierbar, es kann nach der Rückspülung ohne Einschränkung wieder verwendet werden. Die Rückspülung mit einem Fluid dauert je nach Medium lediglich wenige Sekunden. Es hat sich gezeigt, dass eine problemlose Rückspülung je nach Medium mit geringem Druck (z.B. 0,5 bar mit etwa 100 bar problemlos möglich ist. Eine Filtration ist über einen weiten Temperaturbereich von - 150° bis zu 1.800° C je nach Filtermaterial, z.B. Glas möglich sind. Als Filtermaterial können auch Buntmetall, rost- und säurebeständiger Stahl, Hartguss sowie alle weiteren Materialien, aus denen kalibrierte Kugeln geformt werden können, verwendet werden.

Die Stützschichten haben nicht nur stützende Wirkung, sie fungieren gleichzeitig auch als Polizeifilter, weswegen je nach Ausführungsform auch auf die oben erwähnten zusätzlichen Pollzeischichten verzichtet werden kann. Das erfindungsgemäße Filterelement kann neben der beschriebenen Platten oder Zylinderform auch als Kugelform und in Segmentbauweise gefertigt sein.

In einer besonders vorteilhaften Ausführungsvariante schließt sich an das perforierte, druckfeste Zylinderrohr ein Feingewebe mit äußerst geringer Maschenweite von etwa 25µm als Innere Stützschicht an. Es folgt die Filterschicht und ein gröberes Gewebe, dass eine vier- bis zehnfach größere Trenngrenze als das Feingewebe der inneren Stützschicht aufweist. Die Filterschicht weist bei einem Kugeldurchmesser von 100µm eine Absolutflitration von 15,47µm auf. Es folgen axial verlaufende Spannstäbe, die sich von außen an die äußere Stützschicht über den Umfang des Filterelements verteilt anlegen. Diese axialen Spannstäbe sind wiederum durch mehrere, über die Länge des Filterelements verteilte radiale Spannelemente umgeben. Die radialen Spannelemente sind ringförmig ausgeführt und elastisch verformbar. Die elastische Verformbarkeit kann beispielsweise durch eine Öffnung des Rings erreicht werden, die ein Aufweiten und elastisches Zurückfedern ermöglicht. Anstelle der ringförmigen Spannelemente sind auch andere selbstnachspannende Spannelemente denkbar, beispielsweise helixförmige Federelemente. Sowohl die axialen Federstäbe als auch die radialen Spannelemente können vorzugsweise aus gehärtetem und angelassenen Federstahl gebildet sein. Endseitig ist das Filterelement durch einen Boden und einen Deckel begrenzt und verschlossen. Im Betrieb wird das Filterelement von außen nach innen durchströmt. Nur für Rückspülungszwecke erfolgt eine umgekehrte Durchströmung. Denkbar ist grundsätzlich auch ein Aufbau, der ein generelles Durchströmen des Filterelements von innen nach außen ermöglicht.

Das erfindungsgemäße Filterelement verursacht nur eine relativ geringe Druckdifferenz und ermöglicht große Durchflussraten aufgrund der optimalen Strömungsbedingungen innerhalb des Filterelements. Es ist sehr klein zu fertigen und kann beispielsweise auch als Pollenfilter verwendet werden.

Anstelle elastischer Spannelemente ist auch eine Kombination von starren Elementen mit elastischen Spannmitteln denkbar.

Das innere Rohr des Filterelements kann an seinem freien Ende ein Kupplungsanschluss zur schnellen Verbindung mit einer Rohrleitung aufweisen, durch die das Fluid in das Filterelement ein-, oder aus diesem abgeleitet wird.

Anhand der nachfolgenden Figuren wird die Erfindung näher erläutert: Die dargestellten Ausführungsbeispiele sind dabei nicht einschränkend zu verstehen, sondern sollen lediglich eine Ausführungsvariante der Erfindung verdeutlichen.

Es zeigen:
- Fig. 1:: Ein erfindungsgemäßes Filterelement in einer ersten Ausführungsvariante In Seitenansicht,
- Fig. 2:: das Filterelement aus Figur 1 im Querschnitt Schnitt,
- Fig. 3:: einen Bereich des Filterelements aus Figur 1 Im Längsschnitt,
- Fig. 4:: einen Bereich einer weiteren erfindungsgemäßen Ausführungsvariantes eines Filterelements mit Polizeischichten im Längsschnitt,
- Fig. 5:: eine Prinzipdarstellung von fünf Kugeln von oben,
- Fig. 6:: eine Prinzipdarstellung von geschichteten Kugeln in drei Lagen in Seitenansicht.

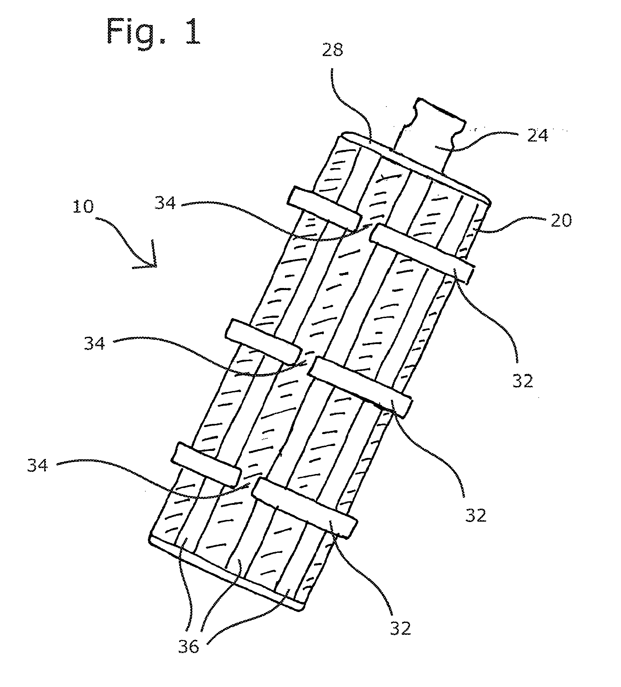

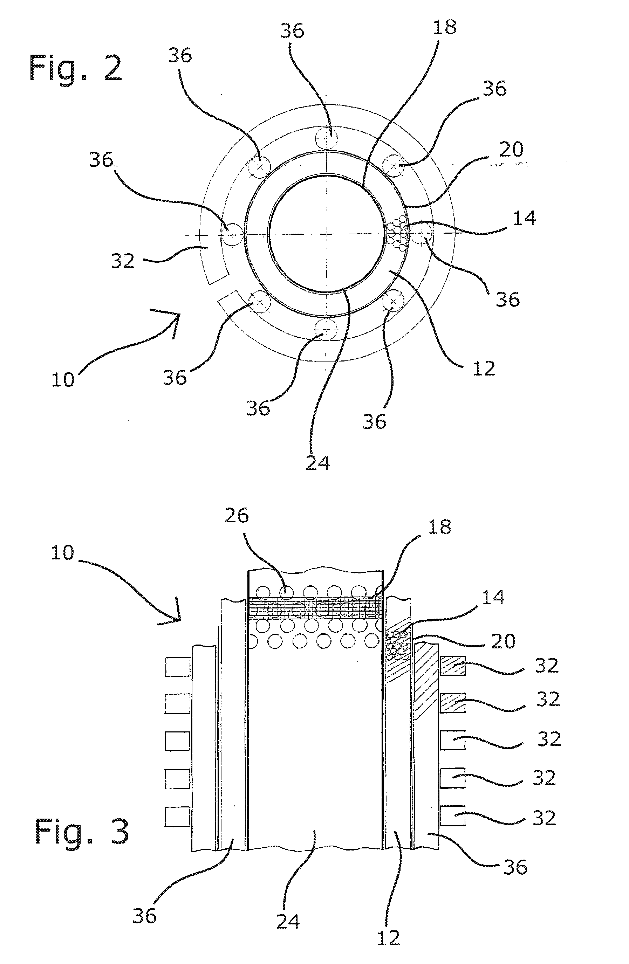

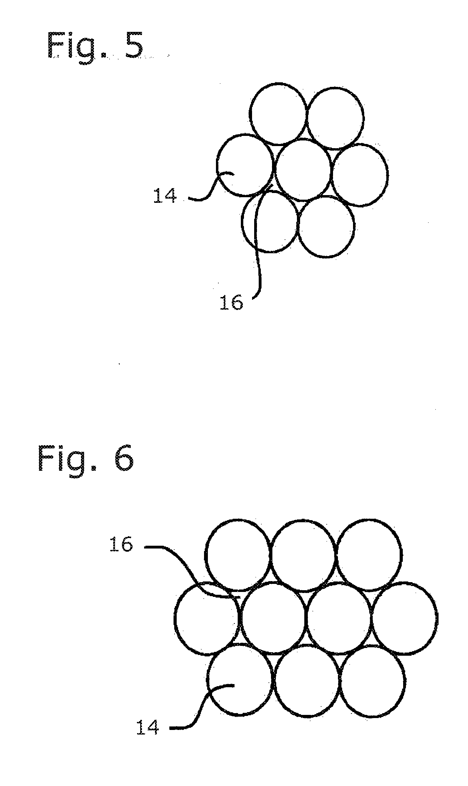

Fig 1 zeigt ein erfindungsgemäßes Filterelement 10 in Seitenansicht, das, wie in Figur 2 gezeigt, eine Filterschicht 12 aufweist, die aus Kugeln 14 (vergleiche auch Fig. 5 oder 6) gebildet Ist.

Die Filterschicht 12 ist zwischen einer Inneren Stützschicht 18 und einer äußeren Stützschicht 20 angeordnet. Die beiden Stützschichten 18, 20 können vorzugsweise aus einem Gewebe gebildet sein. Die Kugeln 14 werden durch die Stützschichten 18, 20 in ihrer Position gehalten. Auf der Außenseite des Filterelementtes 10 der gezeigten Ausführungsvariante sind Spannelemente 32 gezeigt, die durch radiale Federringe gebildet sind und die äußere Stützschicht 20 gegen die Filterschicht 12 drücken. Die Federringe weisen Spalte 34 auf, die ein Aufweiten und Verengen der elastischen Federringe ermöglichen. Zur Verbesserung der Stabilität und Druckvertellung durch die Federringe sind weiterhin axiale Spannstäbe 36 vorgesehen, die zwischen der äußeren Stützschicht 20 und den Spannmitteln 36, hier den Federringen angeordnet sind.

Die Figuren zeigen eine Ausführung des Filterelements 10 als zylinderförmiger Körper. Im Inneren des Filterelements 10 ist ein Rohr 24 zur Ab- oder Zuleitung eines Fluids erkennbar. Das Rohr 24 weist Öffnungen 26 auf (vgl. Fig. 3).

Das erfindungsgemäße Filterelement 10 kann kopfseitig einen Deckel 28 aufweisen, es kann aber auch mit einem oder mehreren weiteren Filterelementen 10 über das Rohr 24 in Reihe geschaltet werden. Auf der dem Deckel entgegengesetzten Seite des Filterelementes 10 ist ein Boden 30 angeordnet. Der Deckel 28 und der Boden 30 verschließen das Filterelement derart, dass ein Bypass ausgeschlossen ist.

Die Kugeln 14 sind vorzugsweise kalibriert, weisen also alle den gleichen Durchmesser auf. Die Figuren 5 und 6 verdeutlichen die grundsätzliche Idee der Filterschicht. Zwischen den aneinander liegenden Kugeln 14 ergibt sich stets ein Zwischenraum 16 gleicher Größe. Somit ist eine sehr scharfe und exakte Trenngrenze erreichbar. Aus Figur 6 wird die Anordnung mehrerer Kugeln 14 übereinander deutlich.

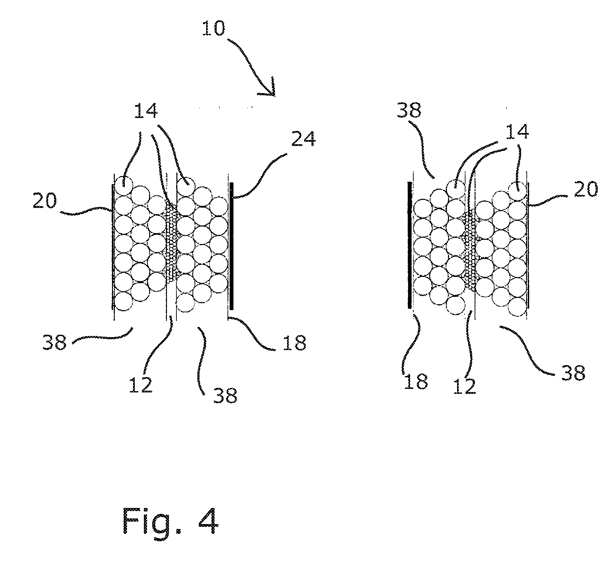

Neben der beschriebenen Ausführung mit zwei Stützschichten 18, 20 und einer Filterschicht 12 kann auch ein mehrschichtiger Aufbau vorgesehen sein. Beispielsweise kann die sehr feine Filterschicht 12 von zwei Polizeischichten 38 umgeben sein, die selbst wiederum von zwei weiteren Stützschichten umhüllt sind (vgl. Fig. 4).

Die Erfindung ist nicht auf die beschriebenen Ausführungsbeispiele beschränkt, sondern umfasst auch sämtliche weiteren gleichwirkenden Ausführungsformen. Denkbar ist beispielsweise auch ein Filterelement 10, dass mehrere Filterschichten 12 aufweist. Auch können die Filterschicht 12 und die Stützschichten 18, 20 mit einer bioaktiven oder katalytisch wirksamen Beschichtung versehen sein. Schließlich bietet sich auch für verschiedene Ausführungsformen die kinematische Umkehr bzw. der umgekehrte Aufbau einzelner oder aller Komponenten an.

## Patentansprüche

1. Regenerierbares Filterelement (10) für das Zurückhalten von Grobstoffen in einem Fluid, mit mindestens einer aus kalibrierten Kugeln (14) gebildeten Filterschicht (12), die zwischen einer sich an die Filterschicht (12) anschließenden durchlässigen inneren Stützschicht (18) und einer sich an die Filterschicht (12) anschließenden durchlässigen äußeren Stützschicht (20) angeordnet ist, wobei
- die Stützschichten (18, 20) jeweils eine Trenngrenze aufweisen, die geringer als der Durchmesser der Kugeln (14) ist,
- die Kugeln (14) lose in der Filterschicht (12) angeordnet sind,
- die Kugeln (14) der Filterschicht (12) durch die Stützschichten (18, 20) in ihrer Position gehalten sind,
- eine zylinderförmige Ausführung mit einem zentralen perforierten Rohr (24) vorgesehen ist, das schichtweise umgeben ist von
- der Inneren Stützschicht (18),
- der Filterschicht (12),
- der äußeren Stützschicht (20),
**dadurch gekennzeichnet, dass**
- auf der Außenseite der äußeren Stützschicht (20) selbstnachspannende Spannelemente (32) vorgesehen sind, die die äußere Stützschicht (20) gegen die Filterschicht (12) in radialer Richtung verspannen,
- zwischen den Spannelementen (32) und der äußeren Stützschicht (20) sich axial erstreckende Spannstäbe (36) angeordnet sind.

2. Regenerierbares Filterelement (10) nach Anspruch 1, **dadurch gekennzeichnet, dass** die die Stützschichten (18, 20) durch Gewebelagen gebildet sind.

3. Regenerierbares Filterelement (10) nach Anspruch 1 oder Anspruch 2, **dadurch gekennzeichnet, dass** die Spannelemente (32) elastisch ausgeführt sind.

4. Regenerierbares Filterelement (10) nach einem der Anspruch 1 bis 3, **dadurch gekennzeichnet, dass** sich an die Filterschicht (12) mindestens eine Polizeischicht (38) anschließt.

5. Regenerierbares Filterelement (10) nach Anspruch 4, **dadurch gekennzeichnet, dass** die Polizeischicht (38) durch Kugeln gebildet ist.

6. Regenerierbares Filterelement (10) nach einem der Ansprüche 1 bis 5, **dadurch gekennzeichnet, dass** die Spannelemente (32) durch Federringe gebildet sind, die das Filterelement (10) umgreifen.

7. Regenerierbares Filterelement (10) nach einem der Ansprüche 1 bis 6, **dadurch gekennzeichnet, dass** die Spannelemente (32) durch helixförmige Federelemente gebildet sind.

8. Regenerierbares Filterelement (10) nach einem der Ansprüche 1 bis 7, **dadurch gekennzeichnet, dass** die Trenngrenze der äußeren Stützschicht (20) die Trenngrenze der inneren Stützschicht (18) das etwa Vier- bis Zehnfache übersteigt.

## Claims

1. A regenerable filter element (10) for retaining coarse matter in a fluid, with at least one filter layer (12), which is formed from calibrated spheres (14) and which is disposed between a permeable inner support layer (18) adjoining the filter layer (12) and a permeable outer support layer (20) adjoining the filter layer (12), wherein
- the support layers (18, 20) each comprise a separation boundary, which is smaller than the diameter of the spheres (14),
- the spheres (14) are disposed loosely in the filter layer (12),
- the spheres (14) of the filter layer (12) are held in their position by the support layers (18, 20),
- a cylindrical embodiment is provided with a central perforated tube (24), which is surrounded layer by layer by
- the inner support layer (18),
- the filter layer (12),
- the outer support layer (20),
**characterised in that**
- self-tensioning clamping elements (32) are provided on the outer side of the outer support layer (20), said clamping elements clamping the outer support layer (20) against the filter layer (12) in a radial direction,
- axially extending tension rods (36) are disposed between the clamping elements (32) and the outer support layer (20).

2. The regenerable filter element (10) according to claim 1, **characterised in that** the support layers (18, 20) are formed by woven fabric layers.

3. The regenerable filter element (10) according to claim 1 or claim 2, **characterised in that** the clamping elements (32) are constituted elastically.

4. The regenerable filter element (10) according to any one of claims 1 to 3, **characterised in that** at least one police layer (38) adjoins the filter layer (12).

5. The regenerable filter element (10) according to claim 4, **characterised in that** the police layer (38) is formed by spheres.

6. The regenerable filter element (10) according to any one of claims 1 to 5, **characterised in that** the clamping elements (32) are formed by spring rings which engage around the filter element (10).

7. The regenerable filter element (10) according to any one of claims 1 to 6, **characterised in that** the clamping elements (32) are formed by helical spring elements.

8. The regenerable filter element (10) according to any one of claims 1 to 7, **characterised in that** the separation boundary of the outer support layer (20) exceeds the separation boundary of the inner support layer (18) approximately by a multiple of four to ten times.

## Revendications

1. Élément de filtration régénérable (10) destiné à retenir les matières grossières dans un fluide, avec au moins une couche filtrante (12) formée à partir de billes calibrées (14), agencée entre une couche de support interne perméable (18) adjacente à la couche filtrante (12) et une couche de support externe perméable (20) adjacente à la couche filtrante (12), dans lequel
- les couches de support (18, 20) comportent chacune une limite de séparation inférieure au diamètre des billes (14),
- les billes (14) sont dispersées en vrac dans la couche filtrante (12),
- les billes (14) de la couche filtrante (12) sont maintenues en position par les couches de support (18, 20),
- il est prévu une saillie cylindrique avec un conduit central perforé (24), enrobé dans les couches suivantes :
- la couche de support interne (18)
- la couche filtrante (12),
- la couche de support externe (20),
**caractérisé en ce que**
- du côté extérieur de la couche de support externe (20) sont prévus des éléments de serrage (32) à auto-serrage, permettant de serrer la couche de support externe (20) contre la couche filtrante (12), dans le sens radial,
- des tiges de serrage (36) s'étendant axialement sont agencées entre les éléments de serrage (32) et la couche de support externe (20).

2. Élément de filtration régénérable (10) selon la revendication 1, **caractérisé en ce que** les couches de support (18, 20) sont formées par des couches de tissu.

3. Élément de filtration régénérable (10) selon la revendication 1 ou la revendication 2, **caractérisé en ce que** les éléments de serrage (32) sont conçus élastiques.

4. Élément de filtration régénérable (10) selon l'une des revendications 1 à 3, **caractérisé en ce qu'**au moins une couche police (38) est adjacente à la couche filtrante (12).

5. Élément de filtration régénérable (10) selon la revendication 4, **caractérisé en ce que** la couche police (38) est formée par des billes.

6. Élément de filtration régénérable (10) selon l'une des revendications 1 à 5, **caractérisé en ce que** les éléments de serrage (32) sont formés par des anneaux élastiques entourant l'élément de filtration (10).

7. Élément de filtration régénérable (10) selon l'une des revendications 1 à 6, **caractérisé en ce que** les éléments de serrage (32) sont formés par des éléments élastiques en forme d'hélices.

8. Élément de filtration régénérable (10) selon l'une des revendications 1 à 7, **caractérisé en ce que** la limite de séparation de la couche de support externe (20) dépasse de quatre à dix fois la limite de séparation de la couche de support interne (18).
